# EUROPEAN PATENT APPLICATION

(11) **EP 1 300 606 A2**
(43) Date of publication of application: **09.04.2003**
(21) Application number: 02256337.3
(22) Date of filing: 12.09.2002
(51) Int. Cl.: F16H 7/06

(54) **Improved fixed ratio power transmission system**

(30) Priority: 05.10.2001 US 327711 P
(71) Applicant: BorgWarner, Inc., Auburn Hills, MI 48236 (US)
(72) Inventor: Mott, Philip J., Dryden, New York 13053 (US)
(74) Representative: Lerwill, John

(57) **Abstract**

A power transmission system for transmitting power between sprockets (30,32) mounted on rotating members (40,42). The system includes a chain (20) comprising a plurality of transverse elements (110,120) maintained in a stack by a carrier (102) received in slots (104) in each transverse element (110,120). Power is transmitted along the chain (20) by contact between the principal faces of the transverse elements (110,120). The transverse elements (110,120) include a plurality of load bearing elements (112) which are configured to engage the teeth (34) of the sprockets and to provide power transmission therewith. The chain (20) extends along a run from a driving sprocket (30) to a driven sprocket (32) and moves along the run from the driving sprocket (30) to the driven sprocket (32). An antibuckling guide (70) is positioned along the run to prevent deflection of the chain (20) perpendicular to the run.

## Description

The present invention relates generally to a system for transmitting power from a rotating shaft to at least one other rotating shaft, and more particularly to a guide for a chain that transmits power between rotating shafts by compression of the chain. The present invention is directed to preventing buckling of a power transmission chain that is comprised of a plurality of transverse members arranged adjacent to each other along the chain. The transverse members are configured to engage the teeth of sprockets.

Power transmission chains are widely used in the automotive industry in automobile transmission systems as well as in engine timing drives. Engine timing systems conventionally include at least one driving sprocket located on the crankshaft and at least one driven sprocket located on a camshaft. Rotation of the crankshaft causes rotation of the camshaft through a chain. In automotive transmission systems, power transmission chains are used, for example, between a torque converter and the input to an automatic transmission. Power transmission chains are also used in transfer cases for four-wheel drive vehicles.

Different types of power transmission are employed to transmit power between rotating shafts. One type is a continuously variable transmission system (CVT). In contrast to a chain that engages sprockets to provide a discrete number of fixed transmission ratios. A CVT system provides any transmission ratio within an allowable range. In general, an endless belt provides power transmission between a drive shaft pulley and at least one driven shaft pulley. Each pulley comprises a pair of conical disks, or sheaves, with converging ends facing each other, so that a groove is formed between the conical disks. The belt is positioned within the groove. In at least one pulley, one conical disk is axially moveable with respect to the other. Because the diameter of the conical disk varies along the axis of the disk, axial movement of the moveable disk changes the running diameter of the belt around the pulley. This change in the running diameter results in a change of the transmission ratio. The change in running diameter also changes the location of the belt approaching and leaving the pulley.

Typically, CVT belts comprise a number of endless metal bands, such as laminated metal strips formed in a loop. A plurality of transverse elements are positioned along the bands, with the bands received in slots in the transverse elements. The transverse elements are typically stamped metal plates arranged front to back around the loop of the endless carrier. The transverse elements typically have a generally trapezoidal shape, with at least two surfaces adapted to contact the sides of the pulleys, thereby providing power transmission between the belt and the pulleys. CVT belts transmit power by compression of the transverse elements along the metal bands. CVT belts are not conventionally supported by guides due to the range of belt positions that results from changing the running diameter of a pulley.

Another type of power transmission employs a chain with links having inverted teeth, sometimes referred to as a silent chain, and at least one toothed sprocket on each rotating shaft. Power transmission between each sprocket and the chain, and consequently between one sprocket and another sprocket, is provided by the meshing of the sprocket teeth with the inverted teeth of the chain.

Inverted tooth chains are formed by an arrangement of link plates in lateral and longitudinal directions. The links are interlaced along the chain and joined by pins. A row of link plates, arranged in the lateral direction, typically has a number of inner links combined with guide links in the center or at both edges of the row. Each inner link plate typically comprises a body portion having a pair of apertures for receiving the pins, and at least one depending toe shaped to fit between the teeth of a sprocket to transmit power between the sprocket and chain. Because the links articulate with each other, inverted tooth chains conventionally transmit power by tension of the chain.

Inverted tooth chains and CVT belts each have certain disadvantages. CVT belts typically have limited power transmission capacity when wrapped around pulleys of small diameter, because of the acute bending required of the metal bands. Inverted tooth chains, which articulate by the rotation of link plates about the pins, do not have this problem when employed with sprockets of small diameter. However, inverted tooth chains are susceptible to damage resulting from a large torque applied to one of the rotating shafts. Excessive torque applied to an inverted tooth chain may cause bending of the pins or failure of the link plates in the area around the pin apertures. In contrast, the load created by excessive torque applied to a CVT belt pulley is transmitted along the length of the belt by compression of the transverse elements against each other. Failure resulting from such torque only occurs if the torque is sufficient to cause deformation of the transverse elements or tensile failure from the bending of the CVT belt. Accordingly, CVT belts are generally less susceptible to failure from excessive torque when operated over a large diameter rotating member.

Another known type of chain that engages teeth of a sprocket and that is formed by transverse members to transmit loads by compression is disclosed by U.S. Patent No. 5,993,345, which is incorporated by reference herein. The chain disclosed by that patent, referred to as a compression fixed ratio chain, is formed by transverse members positioned adjacent to each other along a chain to form an endless loop. The transverse members form principal faces that contact adjacent members. The chain transmits load by compression forcing principal faces of adjacent transverse members to bear against each other. The transverse members engage and are positioned along a carrier band that forms an endless loop. The transverse members have different shapes so that some members extend between teeth of a sprocket and members between those that extend between the teeth are radially outward from the sprocket teeth.

Because load is transmitted by compression of a run between sprockets, buckling of the chain along that run is a concern, particularly for relatively long runs. In buckling, a chain moves perpendicular to the chain run direction allowing the compressive load to deform the chain rather than transmitting power to the driven sprocket.

Because the chain is constructed to wrap sprockets, it is flexible in the plane of the sprockets. In contrast, the chain need not deflect from the plane of the sprockets to transmit power, so the carrier band and the transverse members are constructed to resist deflection from the sprocket plane. Consequently, buckling of the chain occurs most frequently by motion of the chain in the plane of the sprockets, either by moving inwardly toward the region within the endless loop, or outwardly from that region.

Accordingly, it is an object of the present invention to provide a power transmission system capable of transmitting power from high torque applied to the rotating members. It is another object of the present invention to increase the capacity of compression fixed ratio chain power transmission systems. It is a further object of the present invention to provide a power transmission system in which buckling of the chain along a run between sprockets that carries the compressive load is resisted. Other objects of the invention will be apparent to one skilled in the art.

### SUMMARY OF THE INVENTION

The present invention relates to power transmission systems and, in particular, to a system of transmitting power between a driving rotating shaft and one or more driven rotating shafts. The present invention also relates to a power transmission chain comprised of a plurality of transverse members arranged in an endless loop. The members are configured so that the chain engages teeth of the sprockets mounted to a rotating shaft, and power is transmitted along the length of the chain by compression of the transverse members. The present invention includes an anti-buckling guide to maintain alignment of the transverse members through a run between sprockets that is transmitting force by compression.

For purposes of this application, the chain direction is the direction of chain travel. The lateral or transverse direction is the direction perpendicular to the chain direction and perpendicular to a plane in which the chain lies to form an endless loop that wraps sprockets. The outward direction is perpendicular to the chain direction and to the lateral directions, and away from the region within the endless loop. The inward direction is opposite the outward direction. The inner surface of the chain is adjacent to the region within the endless loop. The outer surface of the chain faces outwardly and is opposite the inner surface. The principal faces of a transverse element are the faces of the transverse elements oriented generally orthogonal to the chain direction.

Power that is transmitted from a driving sprocket to a driven sprocket through the chain is carried by compression of the chain. Within the chain, power is transmitted along the length of the chain by contact between the principal faces of the transverse elements. An anti-buckling guide according to the present invention is positioned adjacent to the chain to prevent buckling perpendicular to the chain direction.

For a better understanding of these and other aspects and objects of the invention, reference should be made to the following detailed description taken in conjunction with the accompanying drawings.

### BRIEF DESCRIPTION OF THE DRAWINGS

In the drawings, which are not to scale,
FIG. 1 is a front view of a power transmission system including a power transmission chain and an anti-buckling guide according to the present invention between two sprockets.
FIG. 2 is a side view of a portion of the power transmission chain shown by FIG. 1 between sprockets.
FIG. 3 is a side view of a portion of the power transmission chain shown by FIG. 1 wrapping a sprocket.

### DETAILED DESCRIPTION OF THE PREFERRED EMBODIMENT

The present invention is directed to increasing the power transmission capacity of a system including a fixed ratio compression power transmission chain. The chain, as described by United States Patent No. 5,993,345, is constructed such that power is transmitted along the chain by compression of transverse elements and the chain is configured to engage the teeth of a sprocket.

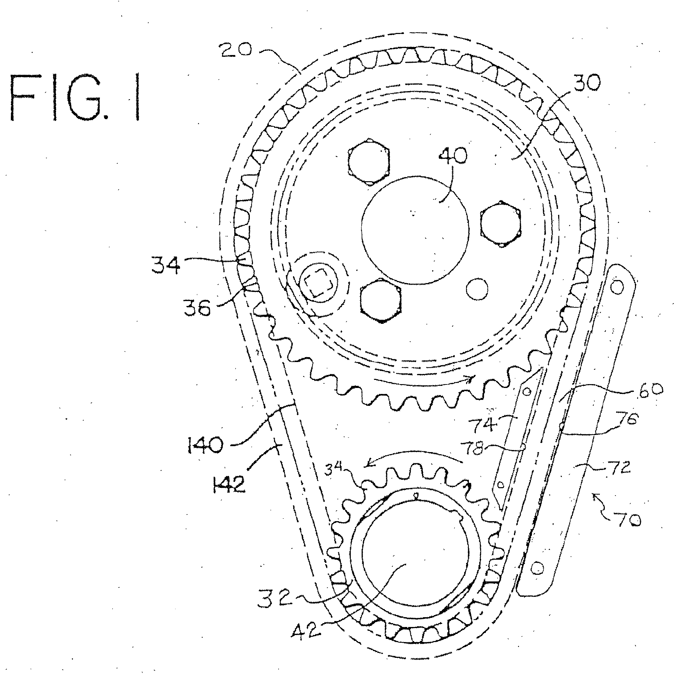

Turning now to the drawings, FIG. 1 illustrates an embodiment of the present invention. An endless chain 20 is wrapped around a driven sprocket 30 and a driving sprocket 32 which are each mounted on a rotating shaft, 40 and 42 respectively. The chain 20 forms an endless loop. An inner surface 140 of the chain 20 is adjacent to the region within the endless loop. An outer surface 142 of the chain 20 faces outwardly from the region within the endless loop. The sprockets 30 and 32 have a plurality of teeth 34 uniformly spaced around the sprockets' outer circumference 36. These sprocket teeth engage the chain 20 at the inner surface 140 as described infra. Rotation of the driving sprocket 32 causes movement of the chain 20, which then causes rotation of the driven sprocket 30.

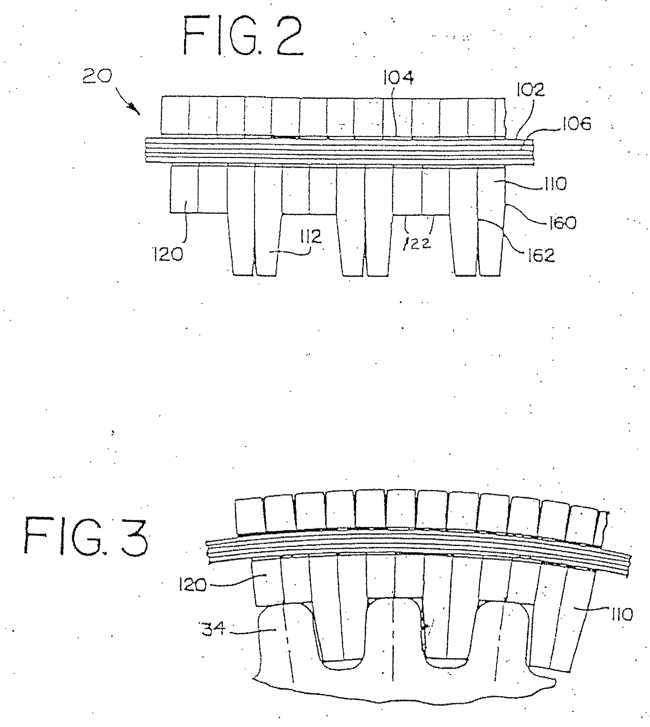

FIG. 2 shows a portion of the chain 20 between sprockets 30 and 32. The chain 20 comprises transverse members 110 and 120 positioned adjacently along the chain direction. The transverse members 110 and 120 each form a recess 104. The recesses 104 are aligned to receive a carrier 102 that forms an endless loop. The carrier 102 comprises a plurality of metal bands 106. Each transverse member 110 and 120 forms principal faces 160 and 162 that face oppositely along the chain direction to contact the adjacent principal face 162 and 160 of the adjacent transverse members 110 or 120. The transverse members 110 include a toe 112 that extends inwardly from the chain 20 beyond the bottom 122 of the transverse members 120. As shown by FIG. 3, the toes 112 extend between the teeth 34 of the sprockets 30 and 32 to engage the sprockets 30 and 32 for driving contact. The construction of the chain 20, and variations, as well as engagement of sprockets are described by U.S. Patent 5,993,345.

As shown by FIG. 1, the driving sprocket 32 rotates counter clockwise causing the chain 20 to move toward the sprocket 30 along a chain run 60 between the driving sprocket 32 and the driven sprocket 30. The teeth 34 of the driving sprocket 32 engage the toes 112 of the transverse members 110 to force the transverse members 110 against transverse members 110 and 120 along the run 60 so that the transverse members 110 and 120 along the run 60 are in compression against each other, and against the transverse members 110 and 120 that wrap and engage the teeth 34 of the driven sprocket of 30.

An antibuckling chain guide 70 is positioned along the chain run 60 to prevent buckling of the chain 20 along the run 60. The antibuckling chain guide 70 includes an outer support 72 positioned along the outer surface 142 of chain 20 and an inner support member 74 positioned along the inner surface 140 of the chain 20 along the run 60. The outer support 72 forms a surface 76 that extends along the outer surface 142 of the chain 20 from a location adjacent to the driving sprocket 32 to a location adjacent to the driven sprocket 30. The inner support 74 forms a surface 78 that extends along the inner surface 140 of the chain 20 between the driving sprocket 32 and the driven sprocket 30.

The antibuckling guide 70 prevents the chain 20 from moving outwardly by contact of surface 76 and the outer surface 142 should the chain 20 deflect outwardly along the run 60. The antibuckling guide 70 prevents the chain 20 from moving inwardly by contact of the surface 78 with the inner surface 140 of the chain 20 along the run 60. Because the chain 20 is constructed to wrap the sprockets 30 and 32 by deforming along the inward and outward directions, buckling of the chain 20 will first occur due to deflection along the inward and outward directions. By preventing such deflection, antibuckling guide 70 increases the compressive load that can be carried along the run 60, and consequently increases the power transmission capacity of the chain 20 from the driving sprocket 32 to the driven sprocket 30.

Those skilled in the art to which the invention pertains may make modifications and other embodiments employing the principles of this invention without departing from its spirit or essential characteristics particularly upon considering the foregoing teachings. The described embodiment is to be considered in all respects only as illustrative and not restrictive and the scope of the invention is, therefore, indicated by the appended claims rather than by the foregoing description Consequently, while the invention has been described with reference to a particular embodiment, modifications of structure, sequence, materials and the like would be apparent to those skilled in the art, yet still fall within the scope of the invention.

## Claims

1. A power transmission system, comprising:
a driving sprocket and a driven sprocket, said sprockets having teeth formed about their outer periphery;
a compression chain at least partially wrapping around said sprockets along an inner surface of the chain, and extending along a run between the sprockets;
said compression chain including a carrier extending along said chain and a plurality of transverse elements arranged along said carrier, each of said transverse elements having at least one recess formed therein, said carrier being received in recesses in said transverse elements;
a first number of said plurality of transverse elements having a first profile and a second number of said plurality of transverse elements having a second profile;
said transverse elements having said first profile configured and positioned to engage said teeth of said sprockets and the second number of traverse elements having said second profile being configured and positioned above the outer periphery of the said teeth;
said compression chain extending along a run from the driving sprocket to the driven sprocket;
said driven sprocket driven to rotate to cause the chain to move along the run from the driving sprocket toward the driven sprocket;
an antibuckling guide positioned along the run to prevent the chain from significant deflection perpendicular to the run.

2. The power transmission system of claim 1 wherein the antibuckling guide forms a surface adjacent to an outer surface of the chain that is opposite the inner surface between the driving sprocket and the driven sprocket.

3. The power transmission system of claim 1 wherein the antibuckling guide forms a surface adjacent to the inner surface of the chain between the driving sprocket and the driven sprocket.

4. The power transmission system of claim 2 wherein the surface of the antibuckling guide extends from a location adjacent to the driving sprocket to a location adjacent to the driven sprocket.

5. The power tranmission system of claim 2 or 4 wherein the antibuckling guide forms a surface adjacent to the inner surface of the chain between the driving sprocket and the driven sprocket.
